# FASCICULE DE BREVET EUROPEEN

(11) **EP 3 307 478 B1**
(45) Date de publication et mention de la délivrance du brevet: **07.08.2019**
(21) Numéro de dépôt: 16733206.3
(22) Date de dépôt: 09.06.2016
(51) Int. Cl.: B23Q 9/00

(54) **UNITÉ D'USINAGE AVEC CHARIOT MOBILE**
EINHEIT FÜR MASCHINELLE BEARBEITUNG MIT BEWEGLICHEM SCHLITTEN
MACHINING UNIT WITH A MOVABLE CARRIAGE

(30) Priorité: 11.06.2015 CH 8342015
(43) Date de publication de la demande: 18.04.2018
(73) Titulaire: Watch Out SA, 1204 Genève (CH)
(72) Inventeur: JACOT, Philippe, 2022 Bevaix (CH); LAPORTE, Sébastien, 74300 Thyez (FR)
(74) Mandataire: P&TS SA (AG, Ltd.)
(86) Numéro de dépôt international: PCT/IB2016/053386
(87) Numéro de publication internationale: WO 2016/199048

(56) Documents cités:
- JP-A- 2003 071 663
- JP-A- 2012 223 876

## Description

### Domaine technique

La présente invention concerne le domaine des machines-outils, et porte notamment sur une unité d'usinage.

La machine-outil poursuit des objectifs d'amélioration relatifs à la précision, à la qualité des pièces (état de surface, état de forme, bavures,..), à l'augmentation de productivité, à la flexibilité et à la place au sol.

Comme principal exemple, on peut citer l'horlogerie mécanique qui cherche toujours à améliorer la précision et la qualité de fabrication des composants afin d'améliorer la performance des mouvements et des rendements d'assemblage en production. D'autres exemples sont les industries automobile, médicale, spatiale ou électronique.

Les machines d'usinage de composants horlogers sont des machines de production faites pour travailler en continu 24h/24 avec un minimum d'intervention humaines. Comme exemple on peut citer les décolleteuses, utilisées pour fabriquer la plupart des composants de révolution d'un mouvement, ou les machines de transfert pour les pièces de type platines et ponts...

Ces machines-outils présentent un encombrement au sol important par leur seule taille, et qui doit encore tenir compte des espaces nécessaires pour l'accessibilité à toutes les parties de la machine-outil par l'opérateur. Cette situation engendre des besoins d'espace de plus en plus étendus compte-tenu du nombre significatifs de telles machines présentes dans un atelier de taille conventionnelle. Par voie de conséquence, on se trouve également confronté à une logistique rendue plus complexe : il s'agit notamment de l'alimentation en barres, de la maintenance, et des réglages, que ce soit pour la mise au point de chaque machine (programmation pour la production d'une nouvelle pièce) ou pour la mise en train (opérations telles que remplacement d'un ou des outils, pour la poursuite de production d'une même série de pièces).

Par ailleurs, les interventions de l'opérateur sur ces machines-outils sont souvent rendues inconfortables notamment par un accès limité à certaines parties de la machine-outil et selon une configuration peu ergonomique, et ce dans un environnement où l'huile est omniprésente. Une amélioration de l'ergonomie des machines-outils, et notamment de l'accessibilité au porte-outil et au porte-pièce est donc souhaitable.

### Etat de la technique

Le document US2011305537A décrit une machine-outil permettant un accès et un remplacement améliorés de ses outils. A cet effet, la machine-outil est pourvue de parois latérales, d'une paroi frontale, d'une paroi postérieure et d'un capot supérieur ayant une position de travail verticale et qui peuvent être pivotés vers le bas pour un accès facilité à la machine. La pièce est disposée sur un support porte-pièce coulissant selon une première direction horizontale X et le porte-outil est mobile selon une direction verticale Z et une deuxième direction horizontale Y. Dans ce cas, on comprend qu'il faut disposer d'un espace important tout autour de la machine-outil pour permettre l'ouverture des parois et du capot et ainsi accéder à l'outil et/ou à la pièce.

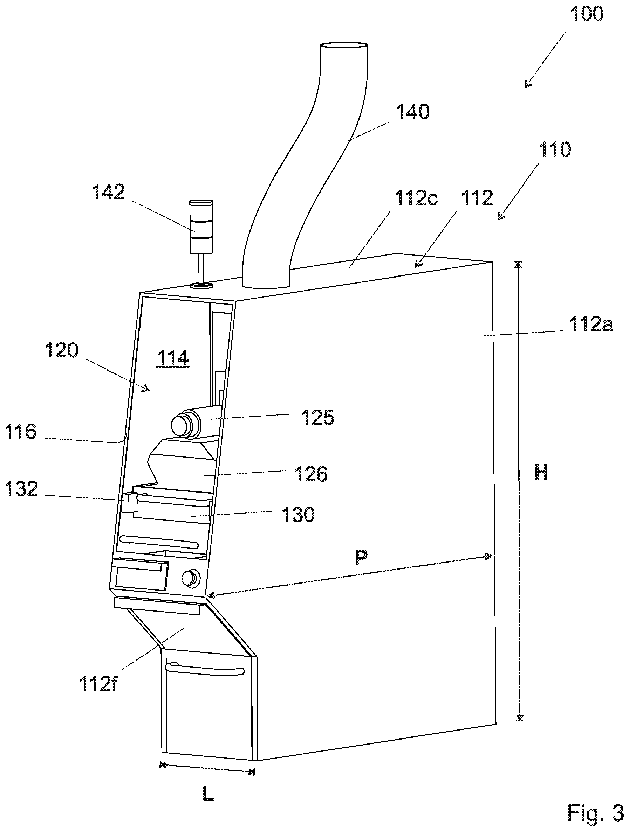

Le document US2007042882 décrit une machine-outil dont l'accès est possible par une porte avant et une porte arrière et par une paroi supérieure pouvant se déployer et se replier à la façon d'un accordéon. Un chariot mobile sur des rails selon une première direction horizontale Y reçoit le porte-outil, ce qui permet à ce dernier de se rapprocher ou de s'écarter du porte-pièce (voir figures 3 à 6).

JP2012223876A présente une machine-outil dans un support, recevant le porte-pièce et sa poupée fixe, est mobile en translation sur un chariot, permettant la sortie partielle du porte-pièce hors de l'enceinte d'usinage.

JP2003071663A décrit une machine-outil miniaturisée délimitée dans une chambre d'usinage. Le porte-pièce est monté sur une porte mobile dans le plan X-Y.

Les machines-outils de l'art antérieur proposent donc des machines-outils avec des cabines de protection présentant plusieurs portes ou parois escamotables pour un accès amélioré de l'opérateur au porte-pièce et/ou au porte-outil. Cependant, il existe encore un besoin important pour une machine-outil pour laquelle non seulement l'accès au porte-pièce et au porte-outil est rendu aisé, mais encore qui présente un encombrement au sol réduit.

### Bref résumé de l'invention

Un but de la présente invention est de proposer une unité d'usinage exempte des limitations des machines d'usinage connues.

Un autre but de l'invention est de proposer une unité d'usinage qui présente une ergonomie améliorée pour que l'opérateur accède aisément à la fois au porte-outil et au porte-pièce, en dehors des périodes de production.

Un autre but de l'invention est de proposer une unité d'usinage qui permette l'accès à tous les composants d'usinage par la même ouverture.

Selon l'invention, ces buts sont atteints notamment au moyen d'une unité d'usinage comportant au moins un module d'usinage, ledit module d'usinage comprenant une cabine de protection délimitant une enceinte et présentant une porte frontale apte à passer d'une position fermée à une position ouverte définissant une ouverture, un ensemble d'usinage muni d'un porte-outil et d'un porte-pièce, un chariot mobile recevant ledit ensemble d'usinage et qui est apte à coulisser sur des moyens de guidage entre une première position dans laquelle ledit ensemble d'usinage est logé dans ladite enceinte et la porte frontale est apte à être fermée en vue de la réalisation de l'usinage d'une pièce par ledit ensemble d'usinage, et une deuxième position dans laquelle le chariot dépasse de la cabine de protection par ladite ouverture et ledit ensemble d'usinage est situé hors de ladite enceinte, ce qui permet un accès à l'ensemble d'usinage depuis l'extérieur de la cabine de protection.

Ainsi, dans la première position du chariot mobile, constituant une position de travail, l'ensemble d'usinage est logé dans l'enceinte fermée et permet la production de séries de pièces selon les techniques d'usinage habituelles.

Dans la seconde position du chariot mobile, constituant une position sans production ou position de traitement, l'ensemble d'usinage est disposé à l'extérieur de l'enceinte, le chariot s'étendant hors de l'enceinte par l'ouverture formée après l'ouverture de la porte frontale.

Cette solution présente notamment l'avantage par rapport à l'art antérieur de permettre d'extraire hors de la cabine de protection, toutes les parties de l'ensemble d'usinage, à savoir le porte-outil et le porte -pièce associé, en une seule opération de sortie du chariot hors de la cabine de protection. De cette façon, l'opérateur peut réaliser dans la position de traitement toutes les manipulations nécessaires sur le porte-outil et/ou le porte-pièce, notamment pour la maintenance, le réglage, le changement de programme, le remplacement de l'ensemble d'usinage ou bien de certaines parties de l'ensemble d'usinage.

L'ensemble formé du porte-outil et du porte-pièce délimite une zone d'usinage. Cette zone d'usinage est, dans la deuxième position du chariot mobile, accessible par trois côtés sur quatre et par le dessus du chariot, et ce à l'extérieur de la cabine de protection, en particulier à l'avant de la cabine de protection.

De préférence, dans la seconde position du chariot mobile, la projection verticale de l'ensemble d'usinage est située à l'extérieur du polygone de sustentation de la cabine de protection. De préférence, dans la seconde position du chariot mobile, la projection verticale de l'ensemble d'usinage est située à l'extérieur de la projection verticale de la cabine de protection. De cette façon, l'opérateur peut accéder à toute la zone d'usinage sans que ses mains pénètrent dans la cabine de protection, et sans avoir à effectuer de contorsion, l'opérateur pouvant rester debout et proche du chariot avec les jambes droites et les pieds sous le chariot.

De plus, par rapport à l'art antérieur, on peut utiliser pour le module d'usinage une cabine de protection avec une seule porte, à savoir la porte frontale, ce qui simplifie la conception et la fabrication de la cabine de protection. Cette conception très compacte permet de disposer librement de l'espace situé sur les deux côtés et à l'arrière de la cabine de protection, et ce dans la position de traitement. On peut ainsi associer plusieurs modules d'usinage orientés dans le même sens avec la porte frontale disposé à l'avant de l'unité d'usinage comprenant lesdits module d'usinage.

Ainsi, l'invention porte également sur une unité d'usinage comportant une pluralité de modules d'usinage disposés côte à côte de façon accolée. Le gain en encombrement est très important, comme il sera décrit plus en détails ci-dessous.

### Brève description des figures

Des exemples de mise en oeuvre de l'invention sont indiqués dans la description illustrée par les figures annexées dans lesquelles :
- la figure 1 illustre une unité d'usinage selon un premier mode de réalisation, vue de côté et en section selon la direction I de la figure 2, dans la première position du chariot mobile,
- la figure 2 représente l'unité d'usinage selon le premier mode de réalisation, depuis la face avant selon la direction Il de la figure 1, sans la vitre de la porte frontale,
- la figure 3 représente l'unité d'usinage selon le premier mode de réalisation, en perspective depuis la face avant et le côté latéral,
- les figures 4 et 5 sont des vues analogues à celle de la figure 3, avec le chariot mobile dans sa deuxième position,
- la figure 6 représente une unité d'usinage selon une variante du mode de réalisation, en perspective depuis la face avant et le côté latéral, comprenant cinq modules d'usinage et tous les chariots dans la première position,
- la figure 7 est une vue analogue à celle de la figure 6 avec le chariot de l'un des modules d'usinage dans la deuxième position, l'ensemble d'usinage correspondant étant sorti de la cabine de protection,
- la figure 8 représente une unité d'usinage selon un second mode de réalisation, en perspective depuis la face avant et le côté latéral, comprenant cinq modules d'usinage et tous les chariots dans la première position, et
- la figure 9 est une vue analogue à celle de la figure 8 avec le chariot de l'un des modules d'usinage dans la deuxième position, l'ensemble d'usinage correspondant étant sorti de la cabine de protection.

### Exemple(s) de mode de réalisation de l'invention

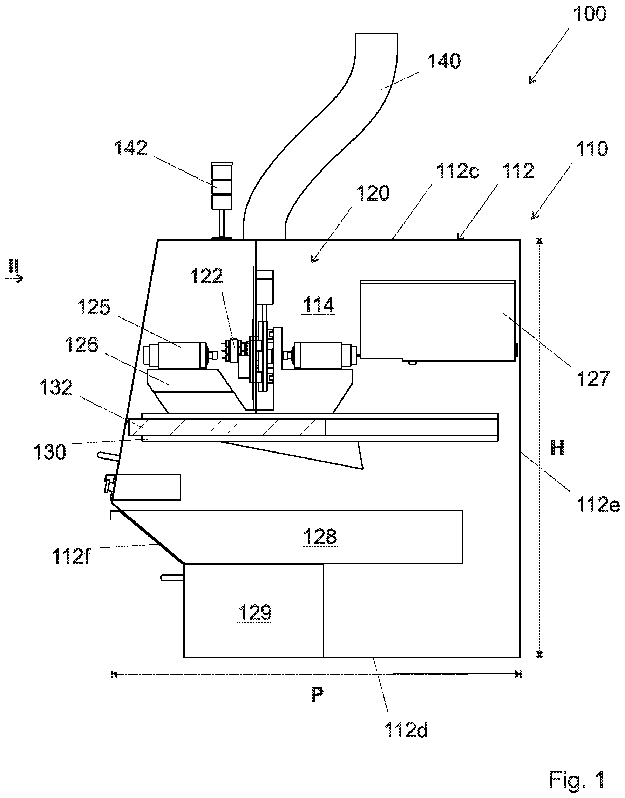

On se reporte aux figures 1 à 3 représentant une unité d'usinage 100 selon un premier mode de réalisation, comprenant un seul module d'usinage 110 représenté sans la porte frontale afin de mieux visualiser l'intérieur du module d'usinage 110.

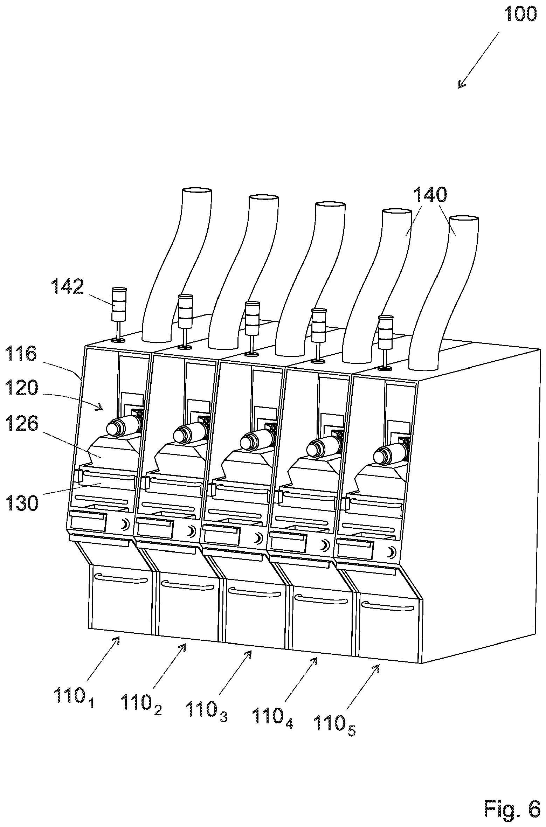

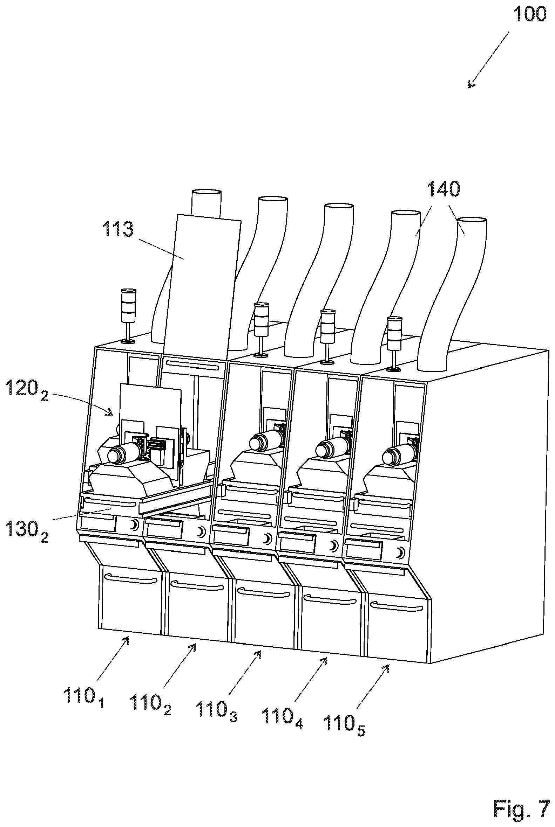

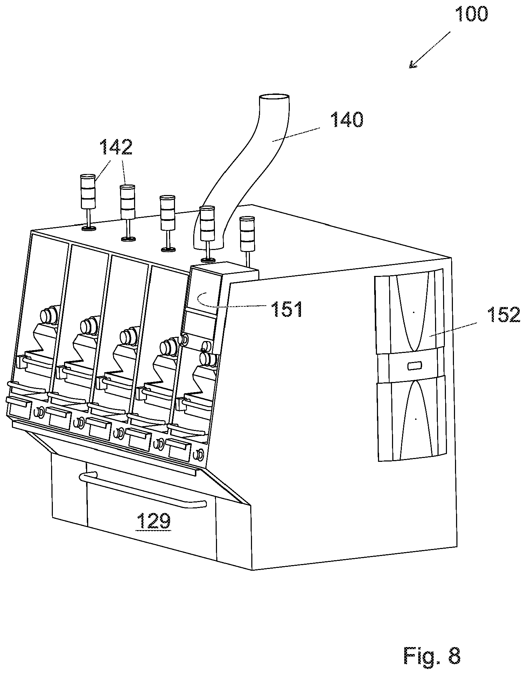

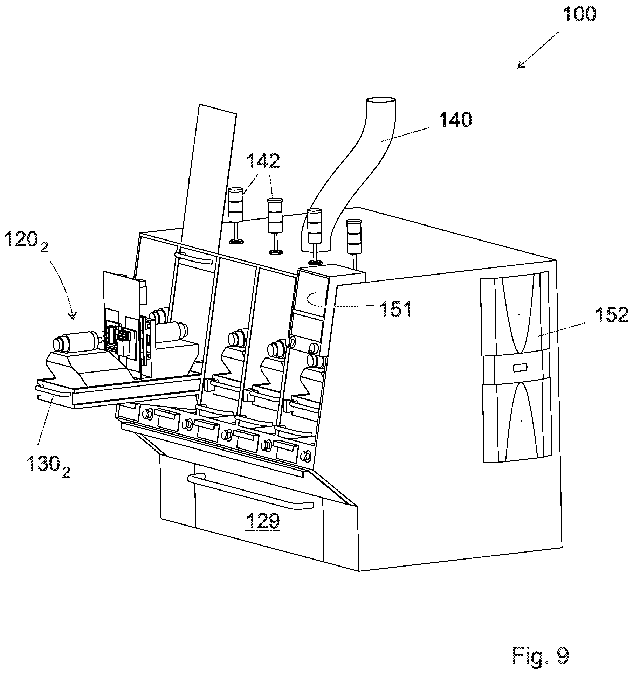

Ce module d'usinage 110 forme un bloc compact, présentant sensiblement la forme d'un parallélépipède rectangle avec une hauteur H (plus grande dimension en direction verticale) et une profondeur P (plus grande dimension en direction horizontale) au moins deux fois, voire au moins trois fois plus grandes que la largeur L (plus petite dimension en direction horizontale). Cette forme étroite et élancée procure un faible encombrement au sol et la possibilité d'associer plusieurs modules d'usinage 110 au sein d'une même unité d'usinage 100 comme il sera décrit plus loin en relation avec les figures 6 et 7 illustrant une variante du mode de réalisation et en relation avec les figures 8 et 9 illustrant un deuxième mode de réalisation. Des formes différentes de cette forme étroite sont bien entendu possibles pour le module d'usinage 110 sans sortir du cadre de la présente invention.

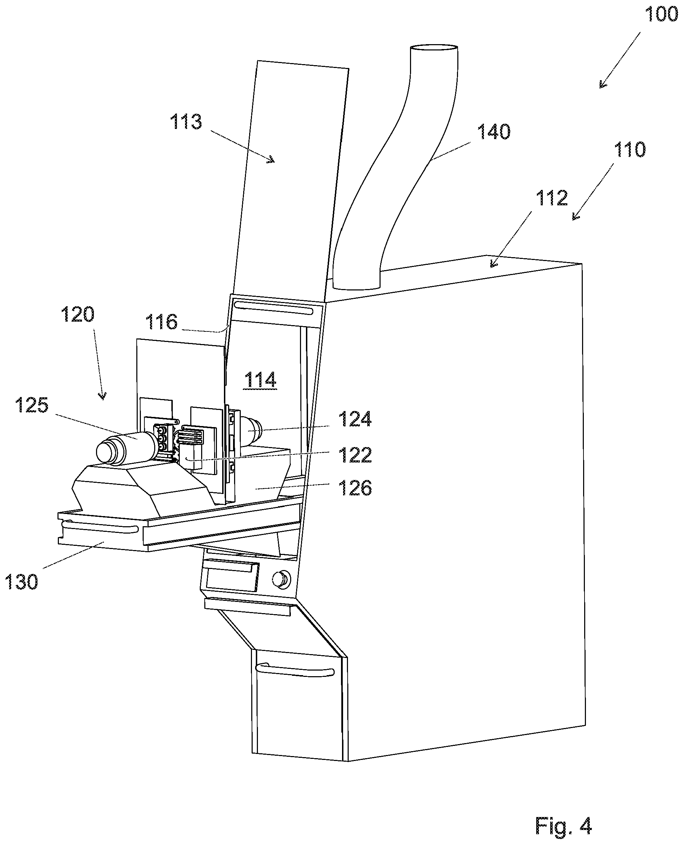

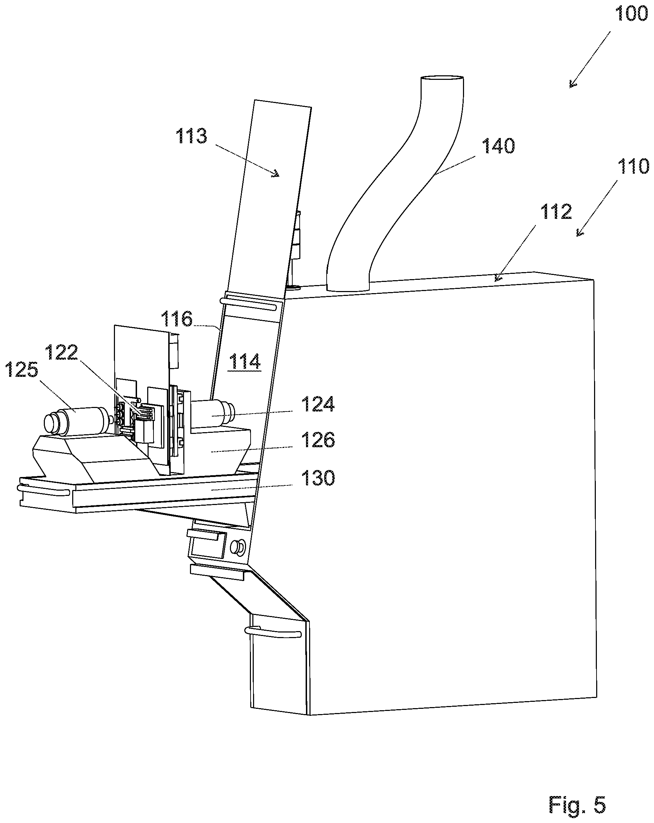

Le module d'usinage 110 est délimité par une cabine de protection 112 constituant une enveloppe fermée délimitant une enceinte 114 pouvant être rendue étanche. Cette cabine de protection 112 comporte deux parois latérales 112a et 112b verticales parallèles entre elles, une paroi supérieure 112c horizontale et parallèle à une paroi inférieure 112d, une paroi arrière 112e verticale, et une paroi avant 112f (ici à plusieurs pans) comportant une porte frontale 113 (non représentée sur les figures 1 à 3 mais visible sur les figures 4 et 5). Cette porte frontale 113 est visible selon une configuration d'ouverture par le haut, en particulier selon un mouvement de coulissement, sur les figures 4 et 5 qui la représentent à l'état ouvert.

Sur les figures 1 à 3, l'ouverture 116 délimitée dans la paroi avant 112f permet de visualiser l'enceinte 114 renfermant notamment un ensemble d'usinage 120. Cet ensemble d'usinage 120 comporte au moins un porte-outil 122 et un porte-pièce 124. Sur les figures 1 à 5, le porte-pièce 124 est une broche et l'ensemble d'usinage comporte en outre une contre-broche 125 (deuxième porte-pièce).

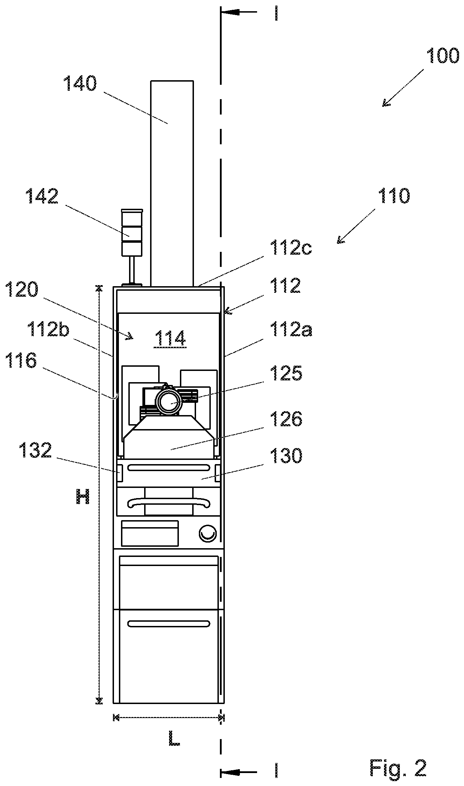

L'ensemble d'usinage 120 est monté sur un chariot mobile 130. Sur les figures, ce chariot mobile 130 se présente sous la forme d'un tiroir. De préférence, le chariot 130 forme un réceptacle apte à récupérer tout liquide de lubrification, notamment de l'huile, et les copeaux de matière résultant de l'usinage d'une pièce par l'ensemble d'usinage. Pour permettre le mouvement d'avancée hors de l'ouverture 116 et le mouvement de recul dans l'enceinte de ce chariot mobile 130, ce dernier est monté sur des moyens de guidage 132. En particulier, ces moyens de guidage 132 peuvent se présenter sous la forme de rails comme on peut le voir sur les figures 2 et 3. Sur les figures 2 et 3, les rails 132 sont montés directement sur les parois latérales 112b de la cabine de protection 112 qui sert de structure portante au module d'usinage 110. Selon d'autres variantes non représentées, ces moyens de guidage et/ou le chariot mobile 130 comportent des galets ou d'autres éléments de roulement, ou encore des patins glissants ou tout autre élément de glissement.

Selon une autre variante de réalisation non représentée, la cabine de protection 112 sert d'enveloppe et entoure le bâti du module d'usinage 110, ce bâti portant les moyens de guidage et supportant le chariot de guidage, et donc l'ensemble d'usinage 120.

Dans la deuxième position du chariot mobile 130, l'accès à l'ensemble d'usinage 120 est possible au moins par quatre côtés, à savoir par le dessus et trois des quatre côtés latéraux (côté avant, côté droit et côté gauche) de l'ensemble d'usinage 120/ du chariot 130 (figures 4 et 5).

Par ailleurs, sur les figures 1 à 5, l'ensemble d'usinage 120 est disposé sur une base de support 126, sur laquelle sont montés la broche 124 et la contre-broche 125, ainsi que le porte-outil ou plusieurs portes-outils 122. La base de support 126 est reçue directement sur le chariot mobile 130. De cette façon, on comprend qu'il est possible de changer un ensemble d'usinage 120 complet d'un module d'usinage, en séparant simplement la base de support 126 du chariot mobile 130, et en y plaçant une nouvelle base de support 126 équipée d'un autre ensemble d'usinage 120. De plus, de cette façon, on conserve ensemble, sur la base de support 126, un porte-outil 122 et un porte-pièce 124 qui sont appariés, et dont il est possible de connaître, lors d'un étalonnage préalable, la position relative entre le porte-outil 122 et le porte-pièce 124, puis de conserver cette position relative tant que le porte-outil 122 et le porte-pièce 124 restent montés sur la base de support 126 sans nouveau réglage.

Selon une variante de réalisation non représentée, la porte frontale 113 de la cabine de protection est basculante entre sa position ouverte et sa position fermée. Egalement, selon une variante de réalisation non représentée, la porte frontale 113 de la cabine de protection s'ouvre vers le bas. Dans ce cas, selon une alternative de réalisation, la porte frontale 113 sert de support au chariot mobile 130 et comporte au moins une partie des moyens de guidage 132. Dans ce cas, on peut réaliser un agencement dans lequel le mouvement de coulissement dudit chariot 130 est réalisé simultanément avec l'ouverture ou la fermeture de la porte frontale 113. Dans une autre alternative, l'agencement est tel que l'ouverture de la porte frontale 113 doit être effective pour permettre le mouvement de coulissement dudit chariot 130.

Le module d'usinage 110 comporte encore une armoire électrique, non représentée sur les figures 1 à 7, située par exemple sur la paroi arrière 112e. Cette armoire électrique est disposée dans l'enceinte 114, ou à l'extérieur de l'enceinte 114. L'enceinte 114 comporte également un bac à copeaux 128, sous le chariot mobile 130, et un bac à huile 129, sous le bac à copeaux 128. Afin de récupérer l'huile et les copeaux dans les bacs dédiés 128 et 129, le fond du chariot 130 est muni de trous, et est par exemple équipé d'une grille ou d'un guide qui se trouve au-dessus du bac à copeaux dans la première position du chariot mobile 130 (figures 1 à 3).

Par ailleurs, le module d'usinage 110 est équipé d'un compartiment de collecte du liquide de lubrification (Bac à huile 129) et d'un circuit de recyclage dudit liquide de lubrification. De préférence, ledit circuit de recyclage dudit liquide de lubrification est thermostaté afin de contrôler la température du liquide de lubrification.

Selon une autre disposition avantageuse, ladite enceinte 114 est thermostatée afin de contrôler la température dans l'enceinte, ce qui contribue donc au contrôle de la température de la pièce mais aussi de tout le module d'usinage 110, y compris les outils, lors de l'usinage de la pièce. Le contrôle de la température de la pièce lors de son usinage dans le module d'usinage 110 est encore amélioré par le contrôle de la température du liquide de lubrification.

Avantageusement, l'enceinte 114 du module d'usinage 110 est étanche lorsque la porte frontale 113 est fermée. De cette façon, lorsque ladite enceinte 114 est étanche à l'air, on peut contrôler plus facilement la température. Alternativement, si l'enceinte 114 du module d'usinage 110 ne dispose pas d'une bonne étanchéité à l'air, on peut la mettre sous dépression, c'est-à-dire sous une pression inférieure à la pression atmosphérique, par un système de mise en dépression (non représenté). Une telle étanchéité/mise en dépression a pour avantage d'éviter la fuite des vapeurs d'huile en dehors de l'enceinte 114.

Egalement, le module d'usinage 110 dispose d'un système d'aspiration des vapeurs présente dans l'enceinte et qui est équipé d'une cheminée d'évacuation des vapeurs 140.

Pour faciliter le contrôle visuel de l'état de fonctionnement de chaque module d'usinage 110, et plus généralement de chaque unité d'usinage 100, on prévoit avantageusement un indicateur visuel de l'état de fonctionnement, tel qu'une lampe de signalisation 142 (voir les figures 1 à 3). Différentes positions de la lampe de signalisation 142 permettent à l'opérateur de connaître l'état du module d'usinage 110 correspondant. Selon un exemple parmi différents codes couleur possibles, la lampe de signalisation est verte quand le module d'usinage 110 fonctionne normalement, orange quand le module d'usinage fonctionne mais qu'une intervention par l'opérateur est nécessaire 110 et rouge quand le module d'usinage 110 est à l'arrêt et nécessite l'intervention de l'opérateur pour sa remise en marche.

Ledit module d'usinage 110 comprend en outre un magasin de barres à usiner 127 situé dans l'enceinte 114, à l'arrière de l'ensemble d'usinage 120 (voir les figures 1 à 3). Ce magasin de barres à usiner 127 alimente ledit ensemble d'usinage 120 barre par barre. Selon une possibilité, le mécanisme de chargement de la barre à usiner dans la broche 124 est autonome, et fonctionne indépendamment de la broche 124. Par exemple, le magasin de barres à usiner 127 fonctionne avec la descente par gravité de la pile de barres, puis la poussée de la barre inférieure de la pile de barres en direction de l'ensemble d'usinage 120. Ainsi, ce magasin de barres à usiner 127 forme un ravitailleur pour l'ensemble d'usinage 120, en alimentant le porte-pièce 124, donc par l'arrière du module d'usinage 110 (par la droite sur les figures). Des séries de barres de différents diamètres, et/ou de différentes matières déjà prêtes permettent à l'opérateur de recharger le magasin 127 de façon rapide et facile.

Lesdites barres présentent de préférence une longueur inférieure à 1 mètre. Avec des barres à usiner assez courtes, on réduit non seulement l'encombrement au sol du magasin 127, mais on contribue de plus à réduire les vibrations lors de l'usinage de la barre, ce qui est un gage de stabilité du procédé d'usinage et donc d'une bonne qualité d'usinage. De plus, la courte taille de la barre permet de faire avancer la barre sans guidage particulier jusqu'au porte-pièce 124, à savoir la broche.

On se reporte maintenant aux figures 6 à 9 représentant une variante du premier mode de réalisation et un deuxième mode de réalisation d'une unité d'usinage selon l'invention comportant plusieurs modules d'usinage disposés côte à côte.

Dans le cas de la variante du premier mode de réalisation visible sur les figures 6 et 7, l'unité d'usinage 100 comporte plusieurs modules d'usinage 110₁, 110₂, 110₃, 110₄, 110₅, similaires au module d'usinage 110 décrit en relation avec les figures 1 à 5, disposés côte à côte, et accolés les uns aux autres par les parois latérales 112a, 112b de leur cabine de protection 112 respective. Dans ce cas, chaque module d'usinage 110₁, 110₂, 110₃, 110₄, 110₅ est indépendant et autonome dans son fonctionnement et ses équipements.

Dans le cas du deuxième mode de réalisation visible sur les figures 8 et 9, l'unité d'usinage 100 comporte plusieurs modules d'usinage 110₁, 110₂, 110₃, 110₄, 110₅, similaires au module d'usinage 110 décrit en relation avec les figures 1 à 5, hormis les différences suivantes :
- les cabines de protection 112 de tous les modules d'usinage 110ᵢ ne forment qu'une seule enveloppe (un seul carénage) avec autant de compartiments que de modules d'usinage 110ᵢ (cinq compartiment formant cinq enceintes 114 pour cinq modules d'usinage 110₁, 110₂, 110₃, 110₄, 110₅ pour l'exemple illustré sur les figures 8 et 9),
- le circuit de recyclage du liquide de lubrification est commun à ladite pluralité de modules d'usinage 110₁, 110₂, 110₃, 110₄, 110₅,
- il existe une armoire électrique 152 unique et un système de commande 151 unique, communs pour ladite pluralité de modules d'usinage 110₁, 110₂, 110₃, 110₄, 110₅.

Dans le cas d'enceintes 114 non étanches, on peut prévoir un système de mise en dépression (non représenté) commun à ladite pluralité de modules d'usinage 110₁, 110₂, 110₃, 110₄, 110₅.

On peut également prévoir (cas de figure non représenté) un bac à copeaux 128 commun à ladite pluralité de modules d'usinage 110₁, 110₂, 110₃, 110₄, 110₅.

En présence d'un système d'aspiration de l'humidité contenue dans les enceintes 114, ce système d'aspiration est de préférence commun à ladite pluralité de modules d'usinage 110₁, 110₂, 110₃, 110₄, 110₅ et est équipé d'une seule cheminée d'évacuation de l'humidité 140 (voir les figures 8 et 9).

Ainsi, le partage de certains ou de tous les systèmes périphériques, tels que le bac à huile 129, et le bac à copeaux 128, le système de mise en dépression, l'armoire électrique 152, le système de commande 151 contribue encore à réduire la surface au sol et réduit le coût de l'unité d'usinage 100 permettant la réalisation de plusieurs usinages simultanément.

Pour le reste, chaque module d'usinage 110₁, 110₂, 110₃, 110₄, 110₅ fonctionne comme le module d'usinage 110 décrit en relation avec les figures 1 à 5, et dispose d'un ensemble d'usinage 120 fonctionnant indépendamment des autres ensembles d'usinage, et qui est accessible dans la deuxième position du chariot mobile 130 correspondant.

On comprend que cette configuration selon la variante du premier mode de réalisation ou selon le deuxième mode de réalisation d'une unité d'usinage avec une pluralité de modules d'usinage 110ᵢ agencés de façon serrée, permet à la zone d'accessibilité de chaque module d'usinage de chevaucher celle des deux modules d'usinage voisins. Malgré ce chevauchement, il n'existe aucune gêne pour l'opérateur qui n'interviendra que sur le module d'usinage pour lequel le chariot mobile 113 est sorti hors de la cabine de protection 112, et se trouve ainsi dans la zone d'accessibilité respective de ce module d'usinage. Il n'y a pas d'encombrement parce que la zone d'accessibilité est utilisée seulement lorsque le chariot mobile 130 est dans sa deuxième position. Cette situation est représentée sur les figures 7 et 9 avec le module d'usinage 110₂, situé entre deux modules d'usinage, dont le chariot mobile 130₂ est dans sa deuxième position, avec l'ensemble d'usinage 120₂ correspondant qui est entièrement situé hors de l'enceinte 114 et donc accessible pour l'opérateur.

Egalement, dans une unité d'usinage 100 comportant une pluralité de modules d'usinage 110ᵢ, on peut disposer de modules d'usinage présentant des équipements identiques, en particulier des ensembles d'usinage 120 identiques (même porte-outil et même porte-pièce) ou bien de modules d'usinage présentant des équipements différents, en particulier des ensembles d'usinage 120 différents (porte-outil et/ou porte-pièce différent(s)).

Dans ce dernier cas, par exemple un ou plusieurs module(s) d'usinage forme(nt) un module d'usinage 3 axes, et un ou plusieurs module(s) d'usinage forme(nt) un module d'usinage à au moins 5 axes, voire à 6 axes. Le porte-outil 124 comporte au moins une broche mais une deuxième broche, telle qu'une contre-broche peut également équiper l'ensemble d'usinage 120. S'agissant du porte-outil 122, il peut s'agir d'un peigne unique apte à porter plusieurs outils, ou encore de deux peignes, de trois peignes ou bien d'une manière générale de plus que deux peignes.

Cinq modules d'usinage 110₁, 110₂, 110₃, 110₄, 110₅ composent l'unité d'usinage 100 selon la variante du premier mode de réalisation, illustré sur les figures 6 et 7, et l'unité d'usinage 100 selon le deuxième mode de réalisation, illustré sur les figures 8 et 9, mais on comprend que l'unité d'usinage 100 peut comporter seulement deux, trois, quatre ou encore plus que cinq modules d'usinage 110ᵢ.

Ainsi, grâce à la présence de modules d'usinage différents dans la même unité d'usinage, on peut fabriquer simultanément différentes pièces, et notamment plusieurs pièces qui sont destinées à être assemblées ensemble, telles les composants d'un mouvement de montre. A titre d'exemple, l'un des modules d'usinage forme une machine de transfert qui permet de fabriquer des ponts et des platines, tandis que d'autres modules d'usinage forment des décolleteuses avec le porte-outil fonctionnant en pince ou bien en pince et canon, et aptes à la réalisation de pièces complexes et/ou de pièce tournées avec des diamètres de barres différentes. Selon un autre exemple, l'un des modules d'usinage 110 constitue une fraiseuse pour l'usinage partiel de certains composants, tels que des ponts ou des platine, tandis que d'autres modules d'usinage forment un autre type de module d'usinage, tel qu'une décolleteuse ou un autre type de machine à usiner.

Par ailleurs, on comprend que puisque chaque module d'usinage 110 présente des caractéristiques vibratoires et thermiques, connues et de préférence contrôlées, c'est toute l'unité d'usinage 100 qui fonctionne avec un procédé d'usinage contrôlé thermiquement et en vibration, de sorte que la stabilité de l'usinage et la qualité des pièces en résultant s'en trouve améliorées.

### Numéros de référence employés sur les figures

- 100: Unité d'usinage
- 110: Module d'usinage
- 112: Cabine de protection
- 112a: Paroi latérale
- 112b: Paroi latérale
- 112c: Paroi supérieure
- 112d: Paroi inférieure
- 112e: Paroi arrière
- 112f: Paroi avant
- 113: Porte frontale
- 114: enceinte
- 116: Ouverture
- 120: Ensemble d'usinage
- 122: Porte-outil
- 124: Porte-pièce (broche)
- 125: Contre-broche
- 126: Base de support
- 127: Magasin de barres à usiner
- 128: Bac à copeaux
- 129: Bac à huile
- 130: Chariot mobile
- 132: Rails de guidage
- 140: Cheminée d'évacuation de l'humidité
- 142: Lampe de signalisation
- 151: Système de commande
- 152: Armoire électrique

## Revendications

1. Unité d'usinage (100) comportant au moins un module d'usinage (110), ledit module d'usinage (110) comprenant une cabine de protection (112) délimitant une enceinte (114) et présentant une porte frontale (113) apte à passer d'une position fermée à une position ouverte définissant une ouverture (116), un ensemble d'usinage (120) muni d'un porte-outil (122) et d'un porte-pièce (124), un chariot mobile (130) recevant ledit ensemble d'usinage (120) et qui est apte à coulisser sur des moyens de guidage (132) entre une première position dans laquelle ledit ensemble d'usinage (120) est logé dans ladite enceinte (114) et la porte frontale (113) est apte à être fermée en vue de la réalisation de l'usinage d'une pièce par ledit ensemble d'usinage (120), et une deuxième position dans laquelle le chariot dépasse de la cabine de protection (112) par ladite ouverture (116) et ledit ensemble d'usinage (120) est situé hors de ladite enceinte (114), ce qui permet un accès à l'ensemble d'usinage (120) depuis l'extérieur de la cabine de protection (112).

2. Unité d'usinage (100) selon la revendication 1, dans laquelle dans la seconde position du chariot mobile (130), la projection verticale de l'ensemble d'usinage (120) est située à l'extérieur de la projection verticale ou tout au moins du polygone de sustentation de la cabine de protection (112)

3. Unité d'usinage (100) selon la revendication 1 ou 2, dans laquelle la porte frontale (113) est basculante entre sa position ouverte et sa position fermée.

4. Unité d'usinage (100) selon l'une quelconque des revendications 1 à 3, dans laquelle la porte frontale (113) s'ouvre vers le bas.

5. Unité d'usinage (100) selon la revendication 4, dans laquelle le mouvement de coulissement dudit chariot peut être réalisé après l'ouverture (116) ou avant la fermeture de la porte frontale (113).

6. Unité d'usinage (100) selon l'une quelconque des revendications 1 à 5, dans laquelle ladite enceinte (114) est apte à être mise sous une pression inférieure à la pression atmosphérique.

7. Unité d'usinage (100) selon l'une quelconque des revendications 1 à 6, dans laquelle le module d'usinage (110) est équipé d'un compartiment de collecte du liquide de lubrification et d'un circuit de recyclage dudit liquide de lubrification.

8. Unité d'usinage (100) selon la revendication 7, dans laquelle ledit circuit de recyclage dudit liquide de lubrification est thermostaté.

9. Unité d'usinage (100) selon l'une quelconque des revendications 1 à 8, dans laquelle ladite enceinte (114) est thermostatée.

10. Unité d'usinage (100) selon l'une quelconque des revendications 1 à 9, dans laquelle ledit module d'usinage (110) comprend en outre un magasin de barres à usiner (127), alimentant ledit ensemble d'usinage (120) barre par barre.

11. Unité d'usinage (100) selon la revendication 10, dans laquelle lesdites barres présentent une longueur inférieure à 1 mètre.

12. Unité d'usinage (100) selon l'une quelconque des revendications 1 à 11, comportant une pluralité de modules d'usinage (110) disposés côte à côte de façon accolée.

13. Unité d'usinage (100) selon les revendications 7 et 12, dans laquelle le circuit de recyclage du liquide de lubrification et/ou le bac à copeaux (128) est commun à ladite pluralité de modules d'usinage (110).

14. Unité d'usinage (100) selon la revendication 12 comportant une armoire électrique (151) et un système de commande (151) unique pour ladite pluralité de modules d'usinage (110).

## Patentansprüche

1. Bearbeitungseinheit (100), umfassend: mindestens ein Bearbeitungsmodul (110), wobei das besagte Bearbeitungsmodul (110) eine Schutzkabine (112) umfasst, welche ein Gehäuse (114) begrenzt und eine vordere Tür (113) aufweist zum Bewegen von einer geschlossenen Position in eine offene Position, welche eine Öffnung (116) definiert; eine Bearbeitungsbaugruppe (120), die mit einem Werkzeughalter (122) und einem Werkstückhalter (124) versehen ist; einen beweglichen Schlitten (130) zum Aufnehmen der besagten Bearbeitungsbaugruppe (120) und welcher in der Lage ist, auf Führungsmitteln (132) zu gleiten zwischen einer ersten Position, in welcher die besagte Bearbeitungsbaugruppe (120) im besagten Gehäuse (114) untergebracht ist und in welcher die vordere Tür (113) zwecks Durchführung der Bearbeitung eines Werkstücks durch die besagte Bearbeitungsbaugruppe (120) geschlossen werden kann, und einer zweiten Position, in welcher der Schlitten aus der Schutzkabine (112) durch die besagte Öffnung (116) hervorsteht und die besagte Bearbeitungsbaugruppe (120) sich ausserhalb des besagten Gehäuses (114) befindet, wodurch der Zugang zur Bearbeitungsbaugruppe (120) von ausserhalb der Schutzkabine (112) ermöglicht.

2. Bearbeitungseinheit (100) gemäss Anspruch 1, worin sich in der zweiten Position des beweglichen Schlittens (130) der vertikale Vorsprung der Bearbeitungsanordnung (120) ausserhalb des vertikalen Vorsprungs oder zumindest des Hebepolygons der Schutzkabine (112) befindet.

3. Bearbeitungseinheit (100) gemäss Anspruch 1 oder 2, worin die vordere Tür (113) zwischen ihrer offenen Position und ihrer geschlossenen Position kippbar ist.

4. Bearbeitungseinheit (100) gemäss irgendeinem der Ansprüche 1 bis 3, worin sich die vordere Tür (113) nach unten öffnet.

5. Bearbeitungseinheit (100) gemäss Anspruch 4, worin die Gleitbewegung des besagten Schlittens nach dem Öffnen (116) oder vor dem Schliessen der vorderen Tür (113) ausgeführt werden kann.

6. Bearbeitungseinheit (100) gemäss irgendeinem der Ansprüche 1 bis 5, worin das besagte Gehäuse (114) dazu ausgelegt ist, unter einem Druck unterhalb des Atmosphärendrucks gesetzt zu werden.

7. Bearbeitungseinheit (100) gemäss irgendeinem der Ansprüche 1 bis 6, worin das Bearbeitungsmodul (110) mit einer Sammelkammer für Schmierflüssigkeit und einem Recyclingkreislauf der besagten Schmierflüssigkeit ausgestattet ist.

8. Bearbeitungseinheit (100) gemäss Anspruch 7, worin der Recyclingkreislauf der besagten Schmierflüssigkeit thermostatisiert ist.

9. Bearbeitungseinheit (100) gemäss irgendeinem der Ansprüche 1 bis 8, worin das besagte Gehäuse (114) thermostatisiert ist.

10. Bearbeitungseinheit (100) gemäss irgendeinem der Ansprüche 1 bis 9, worin das besagte Bearbeitungsmodul (110) ferner ein Magazin für zu bearbeitende Stangen (127) umfasst, welches die besagte Bearbeitungsbaugruppe (120) stückweise speist.

11. Bearbeitungseinheit (100) gemäss Anspruch 10, worin die besagten Stangen eine Länge von weniger als 1 Meter aufweisen.

12. Bearbeitungseinheit (100) gemäss irgendeinem der Ansprüche 1 bis 11, umfassend eine Vielzahl von Bearbeitungsmodulen (110), welche nebeneinander angefügt angeordnet sind.

13. Bearbeitungseinheit (100) gemäss den Ansprüchen 7 und 12, worin der Recyclingkreislauf der Schmierflüssigkeit und/oder die Späneschale (128) den mehreren Bearbeitungsmodulen (110) gemeinsam ist.

14. Bearbeitungseinheit (100) gemäss Anspruch 12, umfassend einen elektrischen Schrank (151) und ein einzelnes Steuersystem (151) für die besagte Vielzahl von Bearbeitungsmodulen (110).

## Claims

1. A machining unit (100) comprising at least one machining module (110), said machining module (110) comprising a protective compartment (112) which delimits an enclosure (114) and has a front door (113), which can go from a closed position to an open position defining an opening (116), a machining assembly (120) provided with a tool-holder (122) and a part-holder (124), a movable carriage (130) which receives said machining assembly (120) and can slide on guide means (132), between a first position in which said machining assembly (120) is accommodated in said enclosure (114), and the front door (113) can be closed for the purpose of carrying out machining of a part by said machining assembly (120), and a second position in which the carriage projects from the protective compartment (112) via said opening (116), and said machining assembly (120) is situated outside said enclosure (114), which permits access to the machining assembly (120) from the exterior of the protective compartment (112).

2. The machining unit (100) as claimed in claim 1, wherein, in the second position of the movable carriage (130), the vertical projection of the machining assembly (120) is situated on the exterior of the vertical projection, or at least of the support polygon of the protective compartment (112).

3. The machining unit (100) as claimed in claim 1 or 2, wherein the front door (113) can be pivoted between its open position and its closed position.

4. The machining unit (100) as claimed in any one of claims 1 to 3, wherein the front door (113) opens downwards.

5. The machining unit (100) as claimed in claim 4, wherein the sliding movement of said carriage can be carried out after the opening (116) or before the closure of the front door (113).

6. The machining unit (100) as claimed in any one of claims 1 to 5, wherein said enclosure (114) can be put under pressure which is lower than atmospheric pressure.

7. The machining unit (100) as claimed in any one of claims 1 to 6, wherein the machining module (110) is equipped with a compartment for collection of the lubrication liquid and a circuit for recycling said lubrication liquid.

8. The machining unit (100) as claimed in claim 7, wherein said circuit for recycling said lubrication liquid is thermostatted.

9. The machining unit (100) as claimed in any one of claims 1 to 8, wherein said enclosure (114) is thermostatted.

10. The machining unit (100) as claimed in any one of claims 1 to 9, wherein said machining module (110) also comprises a store (127) for bars to be machined which supplies said machining assembly (120) bar by bar.

11. The machining unit (100) as claimed in claim 10, wherein said bars have a length of less than 1 m.

12. The machining unit (100) as claimed in any one of claims 1 to 11, comprising a plurality of machining modules (110) placed side-by-side adjoined to one another.

13. The machining unit (100) as claimed in claims 7 and 12, wherein the lubrication liquid recycling circuit and/or the swarf container (128) is/are common to said plurality of machining modules (110).

14. The machining unit (100) as claimed in claim 12, comprising an electrical control box (151) and a single control system (151) for said plurality of machining modules (110).
